# NEUE EUROPÄISCHE PATENTSCHRIFT

(11) **EP 1 219 158 B2**
(45) Veröffentlichungstag und Bekanntmachung des Hinweises auf die Entscheidung über den Einspruch: **13.01.2016**
(45) Hinweis auf die Patenterteilung: 24.01.2007
(21) Anmeldenummer: 01128561.6
(22) Anmeldetag: 30.11.2001
(51) Int. Cl.: A01D 43/06

(54) **Einrichtung zur Optimierung der Überladung von Erntegut an landwirtschaftlichen Fahrzeugen**
Device for optimizing the overloading of crops in an agricultural vehicle
Dispositif pour optimiser le transbordement de produits de récolte à un véhicule agricole

(30) Priorität: 23.12.2000 DE 10064860
(43) Veröffentlichungstag der Anmeldung: 03.07.2002
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- WO-A1-00/35265
- DE-A- 2 758 247
- DE-A- 4 426 059
- DE-A- 19 647 522
- DE-A- 19 848 127
- DE-A1- 19 647 522
- DE-A1- 19 705 842
- FR-A- 1 541 482
- JP-A- H04 101 206
- US-A- 3 946 825
- PATENT ABSTRACTS OF JAPAN vol. 014, no. 562 (C-0788), 13. Dezember 1990 (1990-12-13) & JP 02 242602 A (ISEKI & CO LTD), 27. September 1990 (1990-09-27)
- Betriebsanleitung Mähdreschers

## Beschreibung

Die Erfindung bezieht sich auf eine Einrichtung zur Optimierung des Überladens von Erntegut von einer Erntemaschine auf ein Transportfahrzeug.

Erntemaschinen, wie Mähdrescher und Feldhäcksler, nehmen während des Erntevorgangs kontinuierlich Erntegut auf, bearbeiten es in bekannter Weise und geben das Erntegut entweder kontinuierlich (z.B. beim Feldhäcksler) oder nach Zwischenspeicherung (z.B. beim Mähdrescher) an einen Ladebehälter ab. Zu diesem Zweck weisen die Erntemaschinen eine Überladevorrichtung auf. Bei einem Mähdrescher wird die Überladevorrichtung von einem Korntankauslaufrohr gebildet; bei einem Feldhäcksler wird die Überladevorrichtung von einem Auswurfkrümmer gebildet. Der Ladebehälter kann sich unmittelbar auf dem Transportfahrzeug befinden oder auf einem an dem Transportfahrzeug angehängten Anhänger.

Bei kontinuierlich abzugebenden Erntegut, wie im Falle des Feldhäckslers, fährt das Transportfahrzeug neben oder hinter der Erntemaschine. Ein verlustfreies Überladen ohne das Erntegut neben den Ladebehälter fällt und eine möglichst vollständige Auslastung des Ladebehälters ist beim Überladen während der Fahrt sehr schwierig.

Auch bei Mähdreschern, die in der Lage sind, das Erntegut zwischenzuspeichern, erfolgt das Überladen (Abtanken des Korntanks) um Zeit zu sparen immer häufiger während des Erntevorgangs, also bei fahrender Erntemaschine.

So sind einige Einrichtungen bekannt geworden, die darauf abzielen, das Überladen zu optimieren. Bei diesen Einrichtungen wird mittels optischer oder akustischer Sensoren die relative Position der Erntemaschine zum Transportfahrzeug bzw. die Ausrichtung der Überladevorrichtung zum Ladebehälter bestimmt. Mit diesen Meßdaten soll dann die Überladevorrichtung von der Erntemaschine aus manuell oder automatisch jeweils für ein optimales Überladen eingestellt werden. Hierbei kann auf verschiedene Verstellmechanismen für die Überladevorrichtung zurückgegriffen werden. So ist beispielsweise der Auswurfkrümmer eines Feldhäckslers horizontal und vertikal verschwenkbar. Darüber hinaus befindet sich am Ende des Auswurfkrümmers eine verschwenkbare Auswurfklappe mit der die Richtung des Erntegutstromes zusätzlich verstellt werden kann.

Eine derartige Einrichtung für einen Feldhäcksler ist beispielsweise aus der DE 44 26 059A1 bekannt. Hier ist eine Kamera vorgesehen, deren Bildbereich sowohl die Auswurfklappe als auch den Ladebehälter gerichtet ist, wobei dieses Bild dem Fahrer des Feldhäckslers zur Steuerung der Überladevorrichtung (Auswurfkrümmer mit Auswurfklappe) auf einem Monitor angezeigt wird.

Alle diese Einrichtungen haben den Nachteil, daß sie versagen, wenn der Fahrer des Transportfahrzeuges ungeübt oder unaufmerksam ist und den Ladebehälter in einen Bereich fährt, der außerhalb dessen liegt, was mit einer Einstellungsänderung der Überladevorrichtung zu korrigieren ist.

Aufgabe der Erfindung ist es daher, eine Einrichtung zur Optimierung des Überladens von Erntegut zu schaffen, die unabhängig ist vom Fahrer des Transportfahrzeuges.

Diese Aufgabe wird erfindungsgemäß durch die kennzeichnenden Merkmale der Ansprüche 1 und 8 gelöst.
Durch diese Einrichtung wird dem Fahrer der Erntemaschine vorteilhaft die Möglichkeit gegeben auf die Fahrgeschwindigkeit und gegebenenfalls auch auf die Fahrrichtung des Transportfahrzeuges ferngesteuert einzuwirken. Es ist daher nicht mehr erforderlich durch Handzeichen oder sonstige Mittel den Fahrer des Transportfahrzeuges zu instruieren.
Ferner befindet sich in einer weiteren Ausgestaltung der Erfindung, auf dem Transportfahrzeug beispielsweise in der Fahrerkabine mindestens ein Umschalter mit dem der Betrieb des Transportfahrzeuges zwischen der manuellen Einstellung der Fahrgeschwindigkeit und/oder des Lenkwinkels durch den Fahrer und der automatischen Einstellung entsprechend der Steuersignale umgeschaltet werden kann. Hierdurch wird dem Fahrer jederzeit die Möglichkeit gegeben, frei zu entscheiden, ob er das Transportfahrzeug manuell steuert oder automatisiert von der Erntemaschine fernsteuern läßt. Der Fahrer des Transportfahrzeuges fährt dieses manuell in eine Überladeposition und betätigt dann je nach Wunsch den Umschalter, so daß ab diesem Zeitpunkt die Fahrgeschwindigkeit oder der Lenkwinkel oder beides von der Erntemaschine aus erfolgt.

Aus Sicherheitsgründen kann die automatische Steuerung des Transportfahrzeuges z.B. bei einer manuellen Betätigung des Lenkrades oder des Gaspedals oder der Fußbremse übersteuert und außer Kraft gesetzt werden.

Die Steuersignale für die Transportfahrzeuge können automatisch oder manuell erzeugt werden. Dazu kann eine Steuereinheit auf der Erntemaschine zur Erzeugung der Steuersignale für die Fahrgeschwindigkeit und/oder den Lenkwinkel manuell vom Fahrer der Erntemaschine bedienbar sein. Für diesen Zweck ist beispielsweise eine Steuereinheit in der Fahrerkabine angeordnet, die von einem im Wirkungsbereich des Fahrers angeordneten Joysticks angesteuert wird. Durch Vor- oder Zurückbewegung des Joysticks kann der Fahrer der Erntemaschine so beispielsweise die Fahrgeschwindigkeit des Transportfahrzeuges erhöhen oder erniedrigen; durch seitliches Bewegen des Joysticks kann er das Transportfahrzeug nach links oder rechts lenken. In der Neutrallage des Joysticks werden dann die Fahrgeschwindigkeit und/oder die Fahrtrichtung des Transportfahrzeugs unverändert beibehalten. Der Fahrer der Erntemaschine, der gegenüber dem Fahrer des Transportfahrzeuges in einer erhöhten Position sitzt, ist somit vorteilhaft in der Lage, das Transportfahrzeug für ein optimales Überladen zu steuern.
Alternativ zur manuellen Bedienung der Steuereinheit ist es auch vorgesehen, die relative Position von Erntemaschine und Transportfahrzeug mit dem Fachmann bekannten Sensoren (optisch, akustisch, Radar) zueinander zu ermitteln. Mit Hilfe der so ermittelten Relativposition werden dann von der Steuereinheit automatisch die Steuersignale für die Fahrgeschwindigkeit und/oder den Lenkwinkel des Transportfahrzeuges berechnet.

Gemäß der Erfindung ist es vorgesehen, die jeweils aktuelle Fahrgeschwindigkeit und/oder den jeweils aktuellen Lenkwinkel der Erntemaschine als Steuersignale für die Fahrgeschwindigkeit und/oder den Lenkwinkel des Transportfahrzeuges zu verwenden. Das Transportfahrzeug paßt sich hierbei mit seiner Fahrgeschwindigkeit und/oder seinem Lenkverhalten automatisch der Erntemaschine an. Dabei werden in einer ersten Ausgestaltung die Fahrgeschwindigkeit und/oder der Lenkwinkel des Transportfahrzeuges direkt immer auf die Fahrgeschwindigkeit und/oder den Lenkwinkel der Erntemaschine eingestellt ohne die Istwerte des Transportfahrzeuges an die Erntemaschine zu melden. In einer Weiterbildung werden die Fahrgeschwindigkeit und der Lenkwinkel der Erntemaschine speziell für das Transportfahrzeug und dessen relativen Lage zum Erntefahrzeug berechnet. Durch die automatisierte Ermittlung der Steuersignale für das Transportfahrzeug wird der Fahrer der Erntemaschine entlastet.

Es befinden sich sowohl auf der Erntemaschine als auch auf dem Transportfahrzeug eine Ortungsvorrichtung beispielsweise ein sogenannter GPS-Empfänger, vorzugsweise eine P-DGPS-Empfänger (Phase-Differential Global Positioning System), zur Positionsbestimmung. Dabei sendet das Transportfahrzeug seine aktuellen, mittels des GPS-Empfängers bestimmten Positionsdaten an die Erntemaschine. Aus den GPS-Daten der Erntemaschine und des Transportfahrzeuges werden dann von der Steuereinheit automatisch die Steuersignale für die Fahrgeschwindigkeit und/oder den Lenkwinkel des Transportfahrzeuges berechnet. Um die GPS-Daten vom Transportfahrzeug an die Erntemaschine zu senden ist auf dem Transportfahrzeug ebenfalls eine Sendeeinheit und auf der Erntemaschine ebenfalls eine Empfangseinheit vorgesehen. Vorzugsweise befindet sich sowohl auf der Erntemaschine als auch auf dem Transportfahrzeug je eine Sende- und Empfangseinheit. Durch diese Ausgestaltung werden die Fahrgeschwindigkeit und die Fahrtrichtung des Transportfahrzeugs aus den Positionsdaten der beiden Fahrzeuge vorteilhaft ermittelt. In einer erweiterten Variante sendet das Transportfahrzeug jeweils seine aktuellen Istwerte (Fahrgeschwindigkeit und/oder Lenkwinkel) an die Erntemaschine, wo dann in der Steuereinheit unter Berücksichtigung dieser Istwerte, Korrekturwerte für die Steuersignale der Fahrgeschwindigkeit und/oder des Lenkwinkels für das Transportfahrzeug erzeugt werden. Zum Senden der Istwerte an die Erntemaschine ist in dieser Variante ebenfalls auf dem Transportfahrzeug eine Sendeeinheit vorgesehen, die vorzugsweise in einer Sende- Empfangseinheit integriert ist. Vorteilhaft werden hierdurch Schlupf und Abdrift des Transportfahrzeuges automatisch ausgeregelt und somit eine bessere Spurführung erreicht.
Falls die Erntemaschine über einen Vorfahrtsregler für die Fahrgeschwindigkeit und/oder über einen Autopiloten für die Lenkung verfügt, so kann die Steuereinheit zur Erzeugung der Steuersignale für die Fahrgeschwindigkeit und/oder des Lenkwinkels für das Transportfahrzeug auf die Daten des Vorfahrtsregler und/oder des Autopiloten zurückgreifen. Damit ist das Transportfahrzeug direkt an den Vorfahrtsregler und/oder den Autopiloten der Erntemaschine angekoppelt.

Die Einrichtung erbringt außerdem einen wirksamen Havarieschutz, insbesondere dann, wenn das Transportfahrzeug hinter der Erntemaschine fährt, wie dies z.B. beim Anschnitt eines Schlages mit dem Feldhäcksler notwendig ist. Sollte der Feldhäcksler beispielsweise wegen eines plötzlich auftauchenden Hindernisses abrupt abbremsen, so kann über die Steuereinheit ein entsprechendes Brems- beziehungsweise Stoppsignal erzeugt werden das an das Transportfahrzeug gesendet wird. Die hierfür benötigte Zeit ist nur ein Bruchteil der Reaktionszeit des Fahrers des Transportfahrzeuges.

Durch eine Einrichtung, die auf mindestens einem Fahrzeug vorhanden ist und den Fahrzeugstatus mindestens des eigenen Fahrzeuges auswählt und dieser in wenigstens einer Einrichtung in zumindest einem Fahrzeug verwendet wird, wird es ermöglicht, daß der jeweilige Zustand des Fahrzeuges einem Status zugeordnet und dieser für weitere Abläufe in dem Fahrzeug Verwendung finden kann. So ist eine Fahrzeugstatus der Erntemaschine, das Aufnehmen und Ernten von Erntegut im Normalbetrieb. Ein weiterer Status wird in einer Erntemaschine durch eine angesprochene Sicherheitseinrichtung zur Vermeidung von Fahrzeugschäden, wie beispielsweise das Ansprechen des Metalldetektors in den Einzugsorganen, in Form eines Sofortstoppstatus ableitbar. Beim Auftreten dieses Statuses, wird dann dem Fahrzeugbediener durch eine akustische oder optische Anzeige darüber informiert. In einer weiteren Ausgestaltung wird, beim Auftreten diese Statuses direkt eine Signal an den Fahrantrieb und gegebenenfalls auch an die Bremsen des Fahrzeuges übermittel und vorteilhaft für einen schnellen Stillstand des Fahrzeuges erreicht. Vorteilhaft wird hierdurch erreicht, das zumindest das Erntefahrzeug dann nicht mehr weiteres Erntegut von dem Bearbeitungsfeld aufnehmen kann oder eine Erntegutmenge vor oder in der Erntegutaufnahmeeinrichtung angesammelt wird.

In einer weiteren Ausgestaltung der Erfindung, ist mindestens ein Fahrzeug auf dem Bearbeitungsfeld mit einer Einrichtung ausgestattet, die den Fahrzeugstatus des jeweiligen Fahrzeuges, beispielsweise über eine verschiedenfarbige Leuchte, von außen sichtbar anzeigt. Dies erbringt der Vorteil, daß auch weiter Fahrzeuge eine Information über den Status des Fahrzeuges ablesen können. Besonders beim Ernten in der Dunkelheit, kann die Sichtverbindung zwischen den Fahrer nicht mehr ausreichend bestehen und dieser Mangel durch diese erfindungsgemäße Anzeige vorteilhaft behoben werden. Bei der Überladung von Erntegut auf eine Transportfahrzeug erhält somit der Fahrer des Transportfahrzeuge eine Information über den Status der Erntemaschine, ohne das dafür eine Sprach- oder Sichtverbindung zwischen den jeweiligen Fahrer vorhanden sein muß. Ferner können sich auch weitere Transportfahrzeuge auf dem Bearbeitungsfeld befinden. Diese besitzen dann jeweils eine Anzeigevorrichtung und zeigen darüber den eigenen Status, beispielsweise den Status "Warten im Stillstand" durch eine grüne Leuchte, "Leerfahrzeug" durch eine blinkende Leuchte oder "Fahrzeug befüllt" durch eine erloschene Leuchte oder durch eine rote Leuchte an. Die Information über den Status kann ferner durch akustische Mittel unterstützt oder als eine mehrfarbige Anzeige ausgebildet sein. Sind einzelne Transportfahrzeuge als unbemannte Fahrzeuge ausgebildet, können weitere Anzeigearten notwendig und verwendet werden.

In einer Weiterbildung der Erfindung, wird mittels einer Übertragungsstrecke, der Fahrzeugstatus eines Fahrzeuges an mindestens ein weiteres Fahrzeug übertragen. Hierdurch erfolgt eine weitere Verbesserung der Einrichtung, durch die Möglichkeit der Anzeige des Statuses an einem beliebigen Punkt unabhängig von der momentanen Position des sendenden Fahrzeuges. Beispielsweise wird der Status an eine weiteres Fahrzeug mittels eine Datenübertragungsstrecke übermittelt und dann dort auf einem Bedienermonitor oder einer Anzeigeeinrichtung angezeigt. Diese Anzeigeeinrichtung, kann auch als eine mobile Einheit mit einer Empfangseinrichtung ausgestattet sein, und läßt sich dann beliebig in dem Sichtbereich des Fahrers, beispielsweise an der vorderen Bordwand des Ladebehälters anbringen. In weiteren Einrichtung auf dem empfangenden Fahrzeug, können dann weitere Reaktionen auf den jeweiligen übermittelten Status abgeleitet werden. Sendet nun die Erntemaschine eine veränderten Status, beispielsweise einen Sofortstoppstatus, bekommt dieses der Fahrer des Transportfahrzeuges auf der Anzeigeeinrichtung angezeigt und kann dann durch eine entsprechende Verringerung der Fahrgeschwindigkeit reagieren. Oder dieser Status kann in einer Einrichtung auf dem Transportfahrzeug direkt in eine automatische Erzeugung des Stillstandes des Transportfahrzeuges beispielsweise über eine Antriebsmanagementeinrichtung überführt werden. Die Übertragungsstrecke, kann ferner für weitere Bedienanweisungen zwischen den Fahrzeugen verwendet werden. Dafür sind dann, beispielsweise an der mobilen Einheit, weitere Anzeigen, beispielsweise als Richtungspfeile ausgebildete Leuchten, vorhanden.

Zur Vermeidung von Datenkollisionen kann der übertragene Status mit einer Priorität versehen werden. Hierdurch wird vorteilhaft erreicht, daß ein wichtiger Status von einem weniger wichtigen Status unterschieden werden kann und somit beispielsweise in den einzelnen Einrichtungen des empfangenden Fahrzeuges, die Reaktionen auf den jeweiligen Status nach der Wichtigkeit abgearbeitet oder gefiltert werden kann.

In einer Weiterbildung der Erfindung, wird mindestens durch eine fahrzeugeigene Einrichtung der eigene Status des jeweiligen Fahrzeuges ermittelt, an eine Sendeeinrichtung der Datenübertragungsstrecke übergeben und dann der Status zyklisch, ereignisabhängig und/oder bei einer externen Statusanfrage gesendet. Vorteilhaft wird hierdurch eine Verringerung der Belastung der Datenübertragungsstrecke erreicht, indem beispielsweise der aktuelle Status nur zyklisch übertragen wird. Tritt nun an dem Fahrzeug oder der Erntemaschine eine Ereignis auf, welches zu einem Wechsel des Statuses führt, kann dann dieser Wechsel ferner zur Aktivierung einer Übertragung des aktuellen Statuses Verwendung finden. Ferner besteht die Möglichkeit den Status auch mittels der Übertragungsstrecke von einem weiteren Fahrzeug oder der Erntemaschine abzurufen. Besonders vorteilhaft ist dies dann, wenn das entsprechende Fahrzeug oder die Erntemaschine nicht mit einer von außen sichtbaren Anzeigeeinrichtung, zur Anzeige des aktuellen Statuses des entsprechenden Fahrzeuges oder der Erntemaschine, versehen ist oder dann wenn diese Anzeige momentan verdeckt und nicht eingesehen werden kann.

In einer weiteren Ausgestaltung der Erfindung, wird der Status eines Fahrzeuges auf Befehl einer fahrzeugeigenen Einrichtung beziehungsweise einer externen Einrichtung verändert. Hierdurch kann vorteilhaft von dem jeweiligen Befehlsgeber an einen Fahrer eine Information übermittelt werden. Ist beispielsweise eine Ladebehälter befüllt, wird diese von dem Fahrer des Erntefahrzeuges zuerst erkannt. Dieser kann dann erfindungsgemäß den Status des entsprechenden Fahrzeuges in beispielsweise den Status "Fahrzeug befüllt" ferngesteuert verändern. Diese Ausgestaltung eignet sich auch im besonderen, für eine Steuerung von unbemannten Transportfahrzeugen. Befinden sich solche Fahrzeuge auf dem Bearbeitungsfeld, kann der Fahrer des Erntefahrzeuge den jeweiligen Status des Transportfahrzeuges an einer Anzeige sehen oder durch eine Abfrage mittels der Übertragungsstrecke abfragen. Kommt nun ein auf dem Bearbeitungsfeld abgestelltes, oder wartendes Transportfahrzeug in den Sichtbereich des Fahrers des Erntefahrzeuges, so kann er bei bedarf, dieses Fahrzeug mittels eines Statuswechsels zu einem automatischen Nachfolgen veranlassen. Entweder erkennt der Fahrer auf einer Anzeige diese Anforderung oder im Fall eines unbemannten Fahrzeuges, wird auf diesem eine automatische Koordination des Transportfahrzeuges in Abhängigkeit der Erntemaschine veranlasst. Den einzelnen Fahrzeugen sind für eine Identifizierung jeweils spezielle Kennungen von außen sichtbar oder mittels der Übertragungsstrecke frei abrufbar oder dem Status jeweils zugeordnet.

Der Fahrer einer Erntemaschine kann, in einer weiteren Ausgestaltung der Erfindung, ein weiteres Fahrzeug, mittels eines gesteuerten Statuses dazu veranlassen, eine Warteposition im Stillstand, eine Warteposition in relativem Abstand bei Fahrt, eine relative gesteuerte Position in relativem Abstand bei Fahrt und/oder eine Warteposition bei Fahrt zu dem weiteren Fahrzeug einzunehmen. Je nachdem welcher Status in dem Fahrzeug ansteht oder eingestellt wird, wird das Fahrzeug zu einer entsprechenden Reaktion und einem entsprechenden Verhalten veranlasst. Entsprechend der eigenen Position der Erntemaschine und des ausgewählten Statuses, können die weiteren Transportfahrzeug,
- in einer Überladeposition, bei der Überladung von Erntegut auf den entsprechenden Ladebehälter, beispielsweise auf einer zur Fahrspur der Erntemaschine parallelen Fahrspur,
- in einer Warteposition, in welcher keine Erntegut übergeben wird, beispielsweise auf der Fahrspur der Erntemaschine
- oder in einer weiteren relativen Position, beispielsweise parallelen Fahrspur zu dem Transportfahrzeug auf welches momentan Erntegut überladen wird,
in einer relativen gesteuerten Position zu dem Erntefahrzeug koordiniert und gehalten werden. Ändert sich nun der Status an einem Transportfahrzeug oder der Erntemaschine, wird dieser je nach Priorität und Ausstattung des jeweiligen Fahrzeuges und der Erntemaschine an die weiteren Fahrzeuge oder die Erntemaschine übertragen und dann dort entsprechende Reaktionen veranlassen. Von der Erntemaschine aus, kann dann eine Koordination der Fahrzeuge vorteilhaft auch in Abhängigkeit des jeweiligen Statuses des einzelnen Transportfahrzeuges oder der Erntemaschine erfolgen. So kann der Wechsel eines Transportfahrzeuges so gesteuert werden, daß ein Fahrzeug mit dem Status "Leerfahrzeug" vor einer Überladung in eine entsprechende relative Position zu der Erntemaschine und das momentan an der Überladung beteiligte Fahrzeug schon vor der vollständigen Befüllung des Ladebehälters, in eine entsprechende Position zu dem Transportfahrzeug mit dem Status "Leerfahrzeug" gesteuert werden. Ist nun der Ladebehälter vollständig befüllt, verstellt der Fahrer der Erntemaschine die Überladeeinrichtung so, daß dann das Erntegut auf den Ladebehälter des Fahrzeuges mit dem Status "Leerfahrzeug" trifft. Anschließend wird das Fahrzeug mit dem befüllten Ladebehälter in eine Warteposition relativ zu der Erntemaschine und dem Fahrzeug mit dem Status "Leerfahrzeug" gesteuert und in dieser relativen gesteuerten Position gehalten. Die Koordinationseinrichtung verändert dann mittels der Übertragungsstrecke den Status der "Leerfahrzeug" auf "Ladebehälter wird befüllt" oder "Befüllung" und steuert dann dieses Transportfahrzeug in der Überladeposition. Der Status des befüllten Fahrzeuges wird dann in den Status "Fahrzeug befüllt" verändert und das Fahrzeug dann in einer relativen gesteuerten Warteposition zu der Erntemaschine geführt. Erreicht nun das Erntefahrzeug beispielsweise das Bearbeitungsfeldende, wird der Status des Fahrzeuges mit dem befüllten Ladebehälter auf "Befüllt Stillstand" geändert, mit den damit verbundenen entsprechenden eigenen Steuerungen, beispielsweise einer Steuerung zum Anziehen der Bremsen oder zum Abstellen des Antriebsmotors. Dieses Fahrzeug wird dann von der Erntemaschine abgegeben oder abgesetzt und kann dann manuell zur einer Entladestelle des Ladebehälters bewegt werden. An dem Bearbeitungsfeldende kann dann das Erntefahrzeug, durch einen entsprechenden erfindungsgemäßen Wechsel eines Statuses, ein wartendes bemanntes oder unbemanntes Transportfahrzeug zu einer entsprechenden automatischen koordinierten oder manuellen Nachfolgung veranlassen.

In einer weiteren Ausgestaltung der Erfindung, wird die Einstellungen der Überladevorrichtung erfasst und im Bereich des jeweiligen Endanschlages automatisch eine Fahranweisung auf dem Anzeigeelement angezeigt und/oder eine Korrektur der Fahrgeschwindigkeit und/oder des Lenkwinkels des Transportfahrzeuges und/oder ein Wechsel des Statuses der Fahrzeuge erzeugt. Durch dieses Verfahren werden die vorgeschlagen Lösungen in Verbindung mit der Überladeeinrichtung automatisiert und erbringen eine vorteilhafte Optimierung des Überladens auf dem Bearbeitungsfeld. Gelangt nun beispielsweise die Auswurfklappe an einen konstruktiven Endanschlag, so wird eine weitere Aktivierung der Verstellung gegen den Endanschlag in eine Fahranweisung an den Fahrer des Transportfahrzeuges erzeugt. Beispielsweise wird automatisch die Fahrtrichtung des Transportfahrzeuges, durch eine Steuersignal zur Veränderung des Lenkwinkel generiert und/oder das erfindungsgemäße Anzeigeelement zeigt eine entsprechende Fahranweisung und/oder der angezeigte Status zeigt eine nicht korrekte Lage des Transportfahrzeuges zur Erntemaschine an. Vorteilhaft kann der Fahrer der Erntemaschine mit den Mittel zur Verstellung der Überladevorrichtung im Bereich der Endanschläge der Vorrichtung, die Koordination zur optimierten Überladung durchführen und es geht weniger Erntegut verloren.

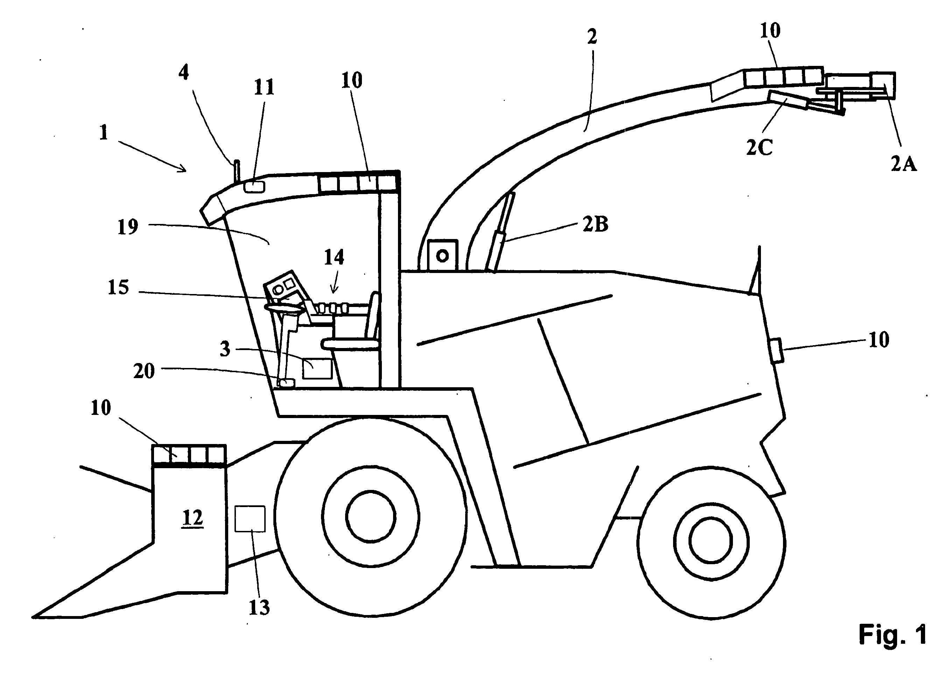

Anhand der beigefügten Zeichnungen soll die Erfindung veranschaulicht werden. In Fig. 1 ist ein Feldhäcksler 1 in einer Seitenansicht dargestellt, der mittels einer Erntegutaufnahmeeinrichtung 12 Erntegut aufnimmt, es bearbeitet und mittels dem als Überladevorrichtung ausgebildeten Auswurfkrümmers 2 auf ein Transportfahrzeug überlädt. Eingezeichnet ist ferner auch das Verstellorgan 2B für die Höhenverstellung des Auswurfkrümmers 2 und das Verstellorgan 2C für eine Verstellung der am Ende des Auswurfkrümmers 2 angeordneten Auswurfklappe 2A. Das Verstellorgan zur Verschwenkung des Auswurfkrümmers 2, zur Überladung von Erntegut links, rechts neben oder entgegengesetzt der Fahrtrichtung hinter den Feldhäcksler 1, ist bekannt und wird hier nicht näher gezeigt. In der Fahrerkabine 19 des Feldhäckslers 1 ist neben dem Fahrersitz eine Bedienkonsole 14 angeordnet, mit Bedientasten und Schaltern sowie Einstellelementen und Anzeigen 15, zur Bedienung und Anzeige der Einrichtungen und Steuerungen des Feldhäcksler 1. In der Bedienkonsole 14, befindet sich eine Steuereinheit 3, zur Ermittlung der Fahranweisung für zumindest ein Transportfahrzeug. Diese Steuereinheit 3 steht mit weiteren Einrichtungen, beispielsweise über eine Busanbindung in dem Feldhäcksler 1, in Verbindung und erfaßt Einstellparameter des Feldhäcksler 1, Informationen über Bedienanweisungen des Fahrers und weitere Ereignisse in dem Feldhäcksler 1. Spricht beispielsweise der Metalldetektor 13 auf vorhandenes Metall in dem Einzug des Feldhäcksler 1 an, wird diese Signal von dieser Steuereinheit 3 erkannt. Auf dem Fahrerkabinenboden ist weiterhin ein Schaltelement 20 angeordnet. Mittels diesem, kann der Fahrer des Feldhäcksler 1 das Anzeigeelement 10 steuern und somit eine Fahranweisung an den Fahrer eines Transportfahrzeuges übermitteln. Das Anzeigeelement 10 ist hier an verschiedenen Stellen an dem Feldhäcksler 1 gezeichnet. Eine Anbringungsstelle kann an der Erntegutaufnahmeeinrichtung 12, eine weiterer an der Fahrerkabine 19, eine weiterer an dem Auswurfkrümmer 2 sowie ein weiterer an der rückwärtigen Seite des Feldhäcksler 1 sein. Dabei ist eine Anzeigeelement 10 an jeder beliebigen Stelle an dem Feldhäcksler 1 oder an einem Transportfahrzeug und ferner auch als mobile Einheit an einem Transportbehälter anbringbar. Dargestellt sind hier jeweils 4 Anzeigeflächen für jeweils eine mögliche Fahrtrichtungsanweisung. Dieses Anzeigeelement 10 ist insbesondere auch für die Anzeige des aktuellen Statuses des Feldhäckslers 1 geeignet. Ein entsprechendes Anzeigeelement 10, kann auch an weiteren Fahrzeugen, zur Anzeige des jeweiligen eigenen Statuses, vorhanden sein. An die Steuereinheit 3 ist eine Sendeeinrichtung 11 mit einer zugeordneten Antenne 4 angeschlossen. Diese Sendeeinrichtung 11 dient der drahtlosen Übertragung von Anweisungen in Form einer Vorgabe der Fahrgeschwindigkeit und/oder des Lenkwinkels an ein Transportfahrzeug. Diese Einrichtung 11 kann in einer Ausführungsvariante auch als Sende- und Empfangseinrichtung ausgebildet sein und ermöglicht dann eine drahtlose bidirektionale Übermittlung von Signalen und Informationen.

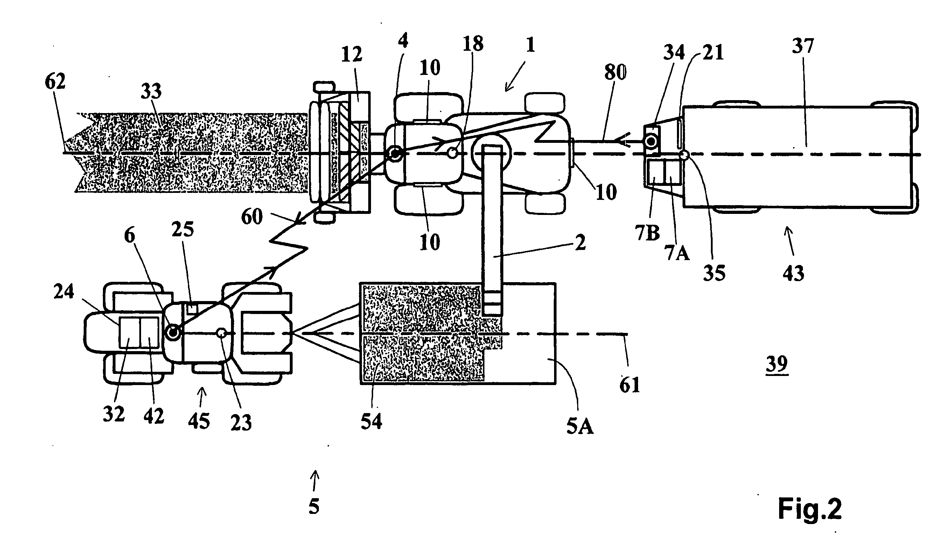

In Figur 2 ist eine Draufsicht auf ein Bearbeitungsfeld 39 gezeigt, auf welchem sich ein Feldhäcksler 1 und zwei weitere Transportfahrzeuge 5 und 43 befinden. Dabei ist es vorgesehen, daß von dem Feldhäcksler 1 aus auch mehrere Transportfahrzeuge 5, 43 steuerbar sind. Damit kann ein Transportfahrzeug 5 aus der Überladeposition herausgeführt und gleichzeitig das nächste Transportfahrzeug 43 aus einer Warteposition in die Überladeposition gebracht werden. Das dargestellte Transportfahrzeug 5, setzt sich aus einem Zugfahrzeug 45 und einem daran angehängten Ladebehälter 5A zusammen. Momentan wird mittels des Auswurfkrümmers 2 Erntegut 33 an den Ladebehälter 5A überladen, wobei der Ladebehälter 5A schon teilweise mit Erntegut 54 befüllt ist. Das Transportfahrzeug 5 bewegt sich auf einer Fahrspur 61 parallel zur Fahrspur 62 des Feldhäckslers 1 und wird zu diesem erfindungsgemäß in der Überladeposition geführt. Die Fahrspur 62 des Feldhäckslers 1 wird von der Lage des Erntegut 33 auf dem Bearbeitungsfeld 39 vorgegeben. Mittels einer Navigationseinrichtung und einer zugehörigen GPS-Antenne 23 wird die Position des Transportfahrzeuges 5 auf dem Bearbeitungsfeldes 39 ermittelt und von einer Sendeeinrichtung mittels der Antennen 6 und 8 über die Übertragungsstrecke 60 an den Feldhäcksler 1 übergeben. Dort wird diese Position in einer Einrichtung mit einer mittels einer weiteren Navigationseinrichtung und einer zugehörigen GPS-Antenne 18 ermittelten Position des Feldhäckslers 1, verrechnet und ein entsprechendes Signal zur Steuerung der Fahrgeschwindigkeit und/oder des Lenkwinkels für das Transportfahrzeuge 5 generiert. Diese Signale werden über die Übertragungsstrecke 60 an die entsprechende Steuereinrichtung 24 übergeben und von der Lenksteuerung 32 und der Antriebssteuerung 42 entsprechende verwertet. Außerdem ist in der Fahrerkabine des Zugfahrzeuges 45 ein Umschalter 25 vorgesehen, mit dem der Betrieb des Transportfahrzeuges 5 zwischen der manuellen Einstellung der Fahrgeschwindigkeit und/oder des Lenkwinkels und der automatischen Einstellung umschaltbar ist.
Das weitere Transportfahrzeug 43 ist als unbemanntes Fahrzeug mit einem aufliegenden Ladebehälter 37 ausgeführt und bewegt sich selbstständig relativ gesteuert zum Feldhäcksler 1 in einer Warteposition auf dessen Fahrspur 62. Auf diesem Transportfahrzeug 43 ist eine GPS-Antenne 35 und weitere Einrichtung zur Steuerung des Lenkwinkels 7A und der Fahrgeschwindigkeit 7B vorhanden. Fahranweisungen und weitere Informationen, erhält dieses Fahrzeug 43 über eine Übertragungsstrecke 80 und einer eigenen Kommunikationseinrichtung 34. Ferner befindet sich an diesem Transportfahrzeug 43 eine Anzeigeeinrichtung 21. Hierüber kann sich der Fahrer des Feldhäcksler 1 über den aktuellen Status des Transportfahrzeuges 43 informieren.

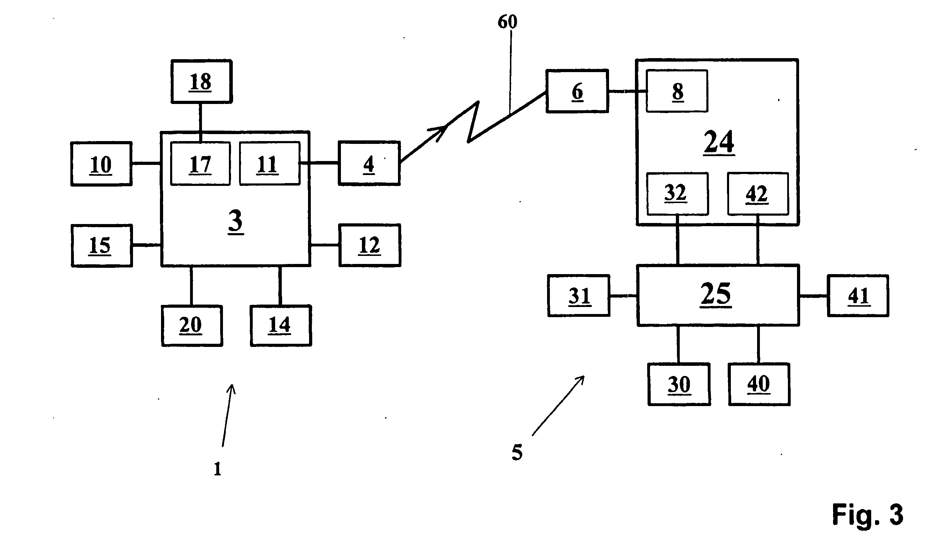

In Figur 3 ist ein Blockschaltbild der Einrichtung dargestellt. Eine Erntemaschine 1 beinhaltet eine Steuereinheit 3, in welcher auch eine Navigationseinheit 17 mit einer zugehörigen GPS-Antenne 18 und eine Sendeeinrichtung 11 mit einer zugehörigen Antenne 4 angeordnet sind. Ferner steht diese Einheit 3 mit einer Anzeige 15, der Bedienkonsole 14 und gegebenenfalls mit einem Anzeigeelement 10 in Verbindung. Die Stellung eines Schaltelementes 20 und der Status eines Metalldetektors 13 werden ebenfalls von der Steuereinheit 3 erfaßt. Zu dem Transportfahrzeug 5 besteht eine Übertragungsstrecke 60. In einer Steuereinrichtung 24 ist dort eine Empfangseinrichtung 8 mit einer zugehörigen Antenne 6 angeordnet. Diese Steuereinrichtung 24 verarbeitet die von der Erntemaschine 1 übertragenen Signale und erzeugt anhand der Vorgabe der Fahrgeschwindigkeit, in einer Antriebssteuerung 32 einen Einstellwert für den Fahrantrieb 30 und in einer Lenksteuerung 42 einen Einstellwert für die Lenkeinrichtung 40. Je nach Stellung des Umschalters 25, wird dann der Fahrantrieb 30 anhand der Vorgabe des Einstellwert von der Antriebssteuerung 32 oder anhand einer manuelle Vorgabe, beispielsweise eines Gaspedals 31, eingestellt. Die Einstellung der Lenkeinrichtung 40 wird ebenfalls, je nach Stellung des Umschalters 25, anhand der Vorgabe des Einstellwertes von Lenksteuerung 42 oder anhand einer manuelle Vorgabe, beispielsweise eines Lenkrades 41, vorgenommen.

## Patentansprüche

1. Vorrichtung zur Optimierung des Überladens von Erntegut (33, 54) von einer Erntemaschine (1) auf ein Transportfahrzeug (5, 43),
**dadurch gekennzeichnet, dass**
auf mindestens einem Fahrzeug (1, 5, 43) mindestens eine Vorrichtung vorhanden ist, die den Fahrzeugstatus mindestens des eigenen Fahrzeuges (1, 5, 43) auswählt und dieser in wenigstens einer Vorrichtung in zumindest einem Fahrzeug verwendet wird, wobei der Erntemaschine (1) mindestens eine Steuereinheit (3) zur Erzeugung von Steuersignalen für die Fahrgeschwindigkeit und/oder den Lenkwinkel des Transportfahrzeuges (5, 43), eine Sendeeinheit (4) zur drahtlosen Übertragung der Steuersignale an das Transportfahrzeug (5, 43) und auf dem Transportfahrzeug (5, 43) eine Empfangseinheit (6, 34) zum Empfang der Steuersignale und mindestens eine Stellvorrichtung (32, 42, 7A, 7B) zur automatischen Einstellung der Fahrgeschwindigkeit und/oder des Lenkwinkels in Abhängigkeit der Steuersignale, vorgesehen ist, wobei die von der Steuereinheit (3) ermittelten Steuersignale die Steuersignale des Transportfahrzeugs (5, 43) sind und jeweils die aktuelle Fahrgeschwindigkeit und/oder der aktuelle Lenkwinkel der Erntemaschine (1) von der Steuereinheit (3) als Steuersignal für die Fahrgeschwindigkeit und/oder den Lenkwinkel des Transportfahrzeuges (5,43) verwendet wird.

2. Vorrichtung nach Anspruch 1,
**dadurch gekennzeichnet,**
**dass** zur Koordination der Fahrzeuge (1,5,43) auf dem Bearbeitungsfeld (39), die Erntemaschine (1) mit wenigstens einem Anzeigenelement (10) ausgestattet ist, mittels welchem der Fahrer der Erntemaschine (1) durch geeignete Mittel eine Fahranweisung erzeugen und an den Fahrer des Transportfahrzeuges (5) übertragen kann.

3. Vorrichtung nach einem der vorhergehenden Ansprüche,
**dadurch gekennzeichnet,**
**dass** mindestens ein Umschalter (25), mit dem der Betrieb des Transportfahrzeuges (5) zwischen der manuellen Einstellung der Fahrgeschwindigkeit und/oder des Lenkwinkels und der automatischen Einstellung umschaltbar ist.

4. Vorrichtung nach einem der vorhergehenden Ansprüche,
**dadurch gekennzeichnet,**
**dass** mindestens ein Fahrzeug (1, 5, 43) auf dem Bearbeitungsfeld (39) mit einer Vorrichtung ausgestattet ist, die den Fahrzeugstatus des jeweiligen Fahrzeugs (1, 5,43), beispielsweise über eine verschiedenfarbige Leuchte (10,21), von außen sichtbar anzeigt.

5. Vorrichtung nach einem der vorhergehenden Ansprüche,
**dadurch gekennzeichnet,**
**dass** mittels einer Übertragungsstrecke (60,80) der Fahrzeugstatus eines Fahrzeuges (1, 5, 43) an mindestens ein weiteres Fahrzeug (1, 5, 43) übertragen wird.

6. Vorrichtung nach einem der vorhergehenden Ansprüche,
**dadurch gekennzeichnet,**
**dass** mindestens durch eine fahrzeugeigene Vorrichtung der eigene Status des jeweiligen Fahrzeuges (1, 5, 43) ermittelt, an eine Sendeeinrichtung (11) der Datenübertragungsstrecke (60, 80) übergeben und dann der Status zyklisch, ereignisabhängig und/oder bei einer externen Statusanfrage gesendet wird.

7. Vorrichtung nach einem der vorhergehenden Ansprüche,
**dadurch gekennzeichnet,**
**dass** der Status auf Befehl einer fahrzeugeigenen Vorrichtung beziehungsweise einer externen Vorrichtung geändert wird.

8. Verfahren zur Verwendung der Vorrichtung nach Anspruch 1 zur Optimierung des Überladens von Emtegut (33,54) von einer Erntemaschine (1) auf ein Transportfahrzeug (5,43),
**dadurch gekennzeichnet,**
**dass** eine dem Transportfahrzeug (5,43) zugeordnete Steuereinrichtung (24) die von der Erntemaschine (1) übertragenen Signale verarbeitet und anhand der Vorgabe der Fahrgeschwindigkeit, in einer Antriebssteuerung (32) einen Einstellwert für den Fahrantrieb (30) und in einer Lenksteuerung(42) einen Einstellwert für die Lenkeinrichtung erzeugt, wobei je nach Stellung eines Umschalters (25) dann der Fahrantrieb anhand der Vorgabe des Einstellwertes von der Antriebssteuerung (32) oder anhand manueller Eingabe eingestellt wird.

9. Verfahren nach Anspruch 8,
**dadurch gekennzeichnet,**
**dass** die Steuereinrichtung mindestens eine Funktion eines Fahrzeuges (1,5,43) bei einem Statuswechsel nach vorgegebenen Übergangsfunktionsabläufe über fahrzeugeigene beziehungsweise externe Vorrichtungen gesteuert, zumindest überwacht wird.

10. Verfahren nach einem der Ansprüche 8 oder 9,
**dadurch gekennzeichnet,**
**dass** der Fahrer einer Erntemaschine (1) ein weiteres Fahrzeug (5, 43) mittels eines gesteuerten Status, dazu veranlassen kann, eine Warteposition im Stillstand, eine Warteposition in relativem Abstand bei Fahrt, eine gesteuerte (Überlade-) Position in relativem Abstand bei Fahrt und/oder eine Warteposition bei Fahrt zu dem weiteren Fahrzeug (1, 5, 43) einzunehmen.

11. Verfahren nach einem der Ansprüche 8 bis 10,
**dadurch gekennzeichnet,**
**dass** die Einstellungen der Überladevorrichtung erfasst und im Bereich des jeweiligen Endanschlages automatisch eine Fahranweisung auf dem Anzeigeelement (10) angezeigt und/oder eine Korrektur der Fahrgeschwindigkeit und/oder des Lenkwinkels des Transportfahrzeuges (5) und/oder ein Wechsel des Status der Fahrzeuge (1,5,43) erzeugt wird.

## Claims

1. Apparatus for optimising the transloading of crop material (33, 54) from a harvester (1) on to a transport vehicle (5, 43),
**characterised in that**
provided on at least one vehicle (1, 5, 43) is at least one apparatus which selects the vehicle status of at least its own vehicle (1, 5, 43) and same is used in at least one apparatus in at least one vehicle, wherein provided on the harvester (1) is at least one control unit (3) for producing control signals for the travel speed and/or the steering angle of the transport vehicle (5, 43) and a transmitting unit (4) for wirelessly transmitting the control signals to the transport vehicle (5, 43) and provided on the transport vehicle (5, 43 is a receiving unit (6, 43) for receiving the control signals and at least one setting apparatus (32, 42, 7A, 7B) for automatically adjusting the travel speed and/or the steering angle in dependence on the control signals, wherein the control signals ascertained by the control unit (3) are the control signals of the transport vehicle (5, 43) and the respective current travel speed and/or the respective current steering angle of the harvester (1) is used by the control unit (3) as a control signal for the travel speed and/or the steering angle of the transport vehicle (5, 43)

2. Apparatus according to claim 1 **characterised in that** for coordination of the vehicles (1, 5, 43) on the working field (39) the harvester (1) is equipped with at least one display element (10), by means of which the driver of the harvester (1) can produce a driving instruction by suitable means and can transmit it to the driver of the transport vehicle (5).

3. Apparatus according to one of the preceding claims **characterised in that** there is provided at least one change-over switch (25) with which operation of the transport vehicle (5) can be switched over between manual setting of the travel speed and/or the steering angle and automatic setting.

4. Apparatus according to one of the preceding claims **characterised in that** at least one vehicle (1, 5, 43) on the working field (39) is equipped with an apparatus which displays the vehicle status of the respective vehicle (1, 5, 43) visibly from the exterior, for example by way of a differently coloured lamp (10, 21).

5. Apparatus according to one of the preceding claims **characterised in that** the vehicle status of a vehicle (1, 5, 43) is transmitted to at least one further vehicle (1, 5, 43) by means of a transmission path (60, 80).

6. Apparatus according to one of the preceding claims **characterised in that** the specific status of a respective vehicle (1, 5, 43) is ascertained at least by an apparatus specific to that vehicle, transferred to a transmitting device (11) of the data transmission path (6, 80) and then the status is transmitted cyclically, in event-dependent manner and/or upon an external status enquiry.

7. Apparatus according to one of the preceding claims **characterised in that** the status is changed upon the command of a vehicle-specific apparatus or an external apparatus.

8. A method of using the apparatus according to claim 1 for optimising the transloading of crop material (33, 54) from a harvester (1) on to a transport vehicle (5, 43),
**characterised in that**
a control device (24) associated with the transport vehicle (5, 43) processes the signals transmitted by the harvester (1) and on the basis of the presetting of the travel speed, in a drive control means (32), produces a setting value for the travel drive (30) and in a steering control means (42) produces a setting value for the steering means, wherein depending on the respective position of a change-over switch (25) the travel drive is then adjusted on the basis of the presetting of the setting value by the drive control means (32) or on the basis of manual input.

9. A method according to claim 8 **characterised in that** at least one function of a vehicle (1, 5, 43) is controlled, at least monitored, upon a status change in accordance with predetermined transitional function procedures by way of vehicle-specific or external apparatuses, by the control device.

10. A method according to one of claims 8 and 9 **characterised in that** the driver of a harvester (1) can cause a further vehicle (5, 43) by means of a controlled status to assume a waiting position in a stationary condition, a waiting position at a relative spacing when travelling, a controlled (transloading) position at a relative spacing when travelling and/or a waiting position when travelling in relation to the further vehicle (1, 5, 43).

11. A method according to one of claims 8 to 10 **characterised in that** the settings of the transloading apparatus are detected and in the region of the respective end abutment a driving instruction is automatically displayed on the display element (10) and/or a correction of the travel speed and/or the steering angle of the transport vehicle (5) and/or a change in the status of the vehicles (1, 5, 43) is produced.

## Revendications

1. Dispositif destiné à optimiser le transfert de produit récolté (33, 54) d'une machine de récolte (1) à un véhicule de transport (5, 43), **caractérisé en ce qu'**il est prévu, sur au moins un véhicule (1, 5, 43), au moins un dispositif qui sélectionne l'état de véhicule au moins du véhicule en question (1, 5, 43) et celui-ci est utilisé dans au moins un dispositif dans au moins un véhicule, sur la machine de récolte (1) étant prévues au moins une unité de commande (3) destinée à produire des signaux de commande de la vitesse de déplacement et/ou de l'angle de braquage du véhicule de transport (5, 43) et une unité d'émission (4) destinée à transmettre sans fil des signaux de commande au véhicule de transport (5, 43), et sur le véhicule de transport (5, 43) étant prévus une unité de réception (6, 34), destinée à recevoir les signaux de commande, et au moins un dispositif d'asservissement (32, 42, 7A, 7B) pour le réglage automatique de la vitesse de déplacement et/ou de l'angle de braquage en fonction des signaux de commande, les signaux de commande captés par l'unité de commande (3) étant les signaux de commande du véhicule de transport (5, 43), et la vitesse de déplacement instantanée et/ou l'angle de braquage instantané de la machine de récolte (1) étant utilisés respectivement par l'unité de commande (3) comme signal de commande de la vitesse de déplacement et/ou de l'angle de braquage du véhicule de transport (5, 43).

2. Dispositif selon la revendication 1, **caractérisé en ce que**, pour la coordination des véhicules (1, 5, 43) présents sur le champ récolté (39), la machine de récolte (1) est équipée d'au moins un élément d'affichage (10) qui, par l'intermédiaire de moyens appropriés, permet au conducteur de la machine de récolte (1) de générer une consigne de conduite et de la transmettre au conducteur du véhicule de transport (5).

3. Dispositif selon une des revendications précédentes, **caractérisé en ce qu'**au moins un commutateur (25) permet de commuter le mode de fonctionnement du véhicule de transport (5) entre le réglage manuel de la vitesse de déplacement et/ou de l'angle de braquage et le réglage automatique.

4. Dispositif selon l'une des revendications précédentes, **caractérisé en ce qu'**au moins un véhicule (1, 5, 43) présent sur le champ à récolter (39) est équipé d'un dispositif qui affiche, de manière visible de l'extérieur, par exemple à l'aide d'un témoin lumineux de différentes couleurs (10, 21), l'état de véhicule du véhicule considéré (1, 5, 43).

5. Dispositif selon l'une des revendications précédentes, **caractérisé en ce que** l'état de véhicule d'un véhicule (1, 5, 43) est transmis à au moins un autre véhicule (1, 5, 43) par un trajet de transmission (60, 80).

6. Dispositif selon l'une des revendications précédentes, **caractérisé en ce que**, à l'aide d'au moins un dispositif propre au véhicule, l'état individuel des différents véhicules (1, 5, 43) est déterminé, fourni à un dispositif d'émission (11) du trajet de transmission de données (60, 80), puis émis cycliquement, en fonction d'un événement et/ou en cas d'interrogation d'état extérieure.

7. Dispositif selon l'une des revendications précédentes, **caractérisé en ce que** l'état est modifié sur instruction d'un dispositif propre au véhicule, respectivement d'un dispositif extérieur.

8. Procédé d'utilisation du dispositif, selon la revendication 1, d'optimisation du transfert de produit récolté (33, 54) d'une machine de récolte (1) à un véhicule de transport (5, 43), **caractérisé en ce qu'**un dispositif de commande (24) associé au véhicule de transport (5, 43) traite les signaux émis par la machine de récolte (1) et, sur la base de la vitesse de déplacement relevée, produit dans une commande du déplacement (32) une valeur de réglage du mécanisme de déplacement (30) et dans une commande de direction (42) une valeur de réglage du dispositif de direction, le mécanisme de déplacement étant réglé, suivant la position d'un commutateur (25), sur la base de la valeur de réglage fournie par la commande du déplacement (32) ou sur la base de données saisies manuellement.

9. Procédé selon la revendication 8, **caractérisé en ce qu'**à l'aide de dispositifs propres au véhicule, respectivement extérieurs, le dispositif de commande pilote ou au moins surveille au moins une fonction d'un véhicule (1, 5, 43) en cas de changement d'état, après exécution de séquences fonctionnelles de transition prédéfinies.

10. Procédé selon la revendication 8 ou 9, **caractérisé en ce que** le conducteur d'une machine de récolte (1) peut ordonner à un autre véhicule (5, 43), à l'aide d'un état contrôlé, d'adopter une position d'attente à l'arrêt, une position d'attente à distance relative en mouvement, une position pilotée (de transfert) à distance relative en mouvement et/ou une position d'attente en mouvement par rapport à l'autre véhicule (1, 5, 43).

11. Procédé selon l'une des revendications 8 à 10, **caractérisé en ce que** les réglages du dispositif de transfert sont détectés et, dans la zone des différentes butées de fin de course, une instruction de déplacement est affichée automatiquement sur l'élément d'affichage (10) et/ou une correction de la vitesse de déplacement et/ou de l'angle de braquage du véhicule de transport (5) et/ou un changement d'état des véhicules (1, 5, 43) sont générés.
